# FASCICULE DE BREVET EUROPEEN

(11) **EP 3 052 357 B1**
(45) Date de publication et mention de la délivrance du brevet: **26.06.2019**
(21) Numéro de dépôt: 14790181.3
(22) Date de dépôt: 06.08.2014
(51) Int. Cl.: B60W 10/06, B60W 30/188, B60W 30/18, F02D 31/00

(54) **PROCÉDÉ ET DISPOSITIF DE DÉTECTION D'UN DÉCOLLAGE PIED LEVÉ D'UN VÉHICULE À MOTEUR THERMIQUE EN VUE DU DÉCLENCHEMENT D'UNE STRATÉGIE D'AIDE AU DÉCOLLAGE**
VERFAHREN UND VORRICHTUNG ZUM ERFASSEN EINES GEWÜNSCHTEN ANFAHRENS EINES FAHRZEUGS MIT BRENNKRAFTMASCHINE OHNE FAHRPEDALBETÄTIGUNG UM EINE UNTERSTÜTZUNGSSTRATEGIE FÜR DAS ANFAHREN AUSZULÖSEN
METHOD AND DEVICE FOR DETECTING DESIRED START FROM REST OF A VEHICLE WITH INTERNAL COMBUSTION ENGINE WITHOUT OPERATING AN ACCELERATOR IN ORDER TO TRIGGER AN ASSIST STRATEGY FOR STARTING FROM REST

(30) Priorité: 30.09.2013 FR 1359418
(43) Date de publication de la demande: 10.08.2016
(73) Titulaire: PSA Automobiles SA, 78300 Poissy (FR)
(72) Inventeur: MARCHYLLIE, Alexis, F-92170 Vanves (FR); NGUYEN, Minh, F-92400 Courbevoie (FR)
(74) Mandataire: Bourguignon, Eric Pascal Jean
(86) Numéro de dépôt international: PCT/FR2014/052049
(87) Numéro de publication internationale: WO 2015/044546

(56) Documents cités:
- EP-A1- 1 609 658
- DE-A1-102011 081 850
- FR-A1- 2 837 888
- FR-A1- 2 844 553

## Description

L'invention concerne les véhicules, éventuellement de type automobile, qui comportent un groupe motopropulseur (ou GMP) à moteur thermique, et un calculateur chargé de mettre en oeuvre des stratégies de gestion du couple devant être fourni par le GMP et de gestion des phases de ralenti du moteur thermique.

EP 1 609 658 décrit un procédé de détection d'un décollage de type "pied levé" d'un véhicule à groupe motopropulseur comprenant toutes les caractéristiques du préambule de la revendication 1.

Comme le sait l'homme de l'art, lorsqu'un véhicule du type précité (comme par exemple un véhicule automobile) commence à prendre de la vitesse au début d'une phase dite de décollage, la fermeture de l'embrayage entraine une transmission aux roues d'une partie au moins du couple qui est fourni par le vilebrequin couplé au moteur thermique. Cette transmission par prélèvement de couple peut rendre difficile le maintien d'un régime moteur donné par les moyens qui sont chargés de la régulation du ralenti, et donc il peut arriver que le moteur thermique cale lors d'un décollage.

Afin de minimiser les occurrences de calage lors d'un décollage, la consigne, définissant le régime moteur devant être maintenu par les moyens de régulation du ralenti, peut être augmentée chaque fois qu'une phase de décollage est détectée. Par exemple, cette détection peut résulter du fait que les quatre conditions suivantes sont satisfaites : la vitesse du véhicule est sensiblement nulle, l'embrayage est ouvert (débrayage), le conducteur n'appuie pas sur la pédale de frein, et aucun rapport de la boîte de vitesses n'est reconnu. Le rapport de la boîte de vitesses étant déterminé en fonction du régime moteur et de la vitesse véhicule, aucun rapport n'est reconnu lorsque le véhicule est à l'arrêt.

Ainsi lorsque les quatre conditions précitées sont simultanément satisfaites, le calculateur en charge des stratégies de gestion augmente la consigne de régulation de ralenti statique des moyens de régulation de ralenti. Cette stratégie d'aide au décollage par augmentation de la consigne de régulation de ralenti statique est particulièrement nécessaire lorsque le décollage se fait sans appui, ou avec un très faible appui, sur la pédale d'accélérateur (cette situation est généralement appelée « décollage pied levé »).

Hélas, la mise en oeuvre de ce type de stratégie lors d'un décollage peut engendrer plusieurs problèmes, notamment du fait que les critères de détermination de la phase de décollage sont peu sélectifs. Ainsi l'augmentation de la consigne de régulation de ralenti statique est généralement appliquée nettement avant le décollage effectif, ce qui provoque une surconsommation de carburant. De plus, cela peut induire des oscillations du régime moteur si les conditions de déclenchement de la stratégie d'aide au décollage évoluent relativement rapidement. Enfin, dans les stratégies connues d'aide au décollage pied levé, une consigne de régulation de ralenti statique nulle est systématiquement fournie lorsque la vitesse du véhicule dépasse un seuil prédéfini.

L'invention a donc notamment pour but d'améliorer la situation, notamment lorsque le véhicule ne dispose pas de capteur de position de l'embrayage (linéaire ou non) et/ou de capteur de point mort.

Elle propose notamment à cet effet un procédé et un dispositif conforment à la revendication 1 et à la revendication 6, destinés à détecter un décollage (ou démarrage) de type dit « pied levé » d'un véhicule à groupe motopropulseur comprenant un vilebrequin, pour déclencher une stratégie d'aide au décollage destinée à augmenter un régime de consigne d'un régulateur de ralenti de ce véhicule, en cas de détection d'un appui sur la pédale d'embrayage, d'une absence d'appui sur la pédale de frein, d'une vitesse du véhicule sensiblement nulle et d'au moins une prise de couple choisie sur le vilebrequin.

Cette détection des décollages avérés du véhicule, en vue de déclencher une stratégie d'aide au décollage pied levé, permet avantageusement d'éviter les oscillations de régime moteur pendant les phases de ralenti. En outre, cela permet une diminution de la surconsommation engendrée par l'élévation du régime moteur pendant les phases de ralenti.

Le procédé selon l'invention peut comporter d'autres caractéristiques qui peuvent être prises séparément ou en combinaison, et notamment :
- on peut inhiber le déclenchement de la stratégie en cas d'une détection d'un fonctionnement du groupe motopropulseur pendant une durée qui est inférieure à un premier seuil choisi ;
- on peut détecter la prise de couple choisie sur le vilebrequin lorsqu'un régime moteur du groupe motopropulseur est inférieur à un deuxième seuil choisi et qu'un gradient de ce régime moteur est inférieur à un troisième seuil choisi, négatif, ou lorsqu'un gradient d'un couple de consigne de régulation de ralenti du groupe motopropulseur est supérieur à un quatrième seuil choisi, positif ;
- on peut déclencher un arrêt de la stratégie lorsque la vitesse du véhicule est supérieure à un cinquième seuil choisi correspondant à la fin du décollage, ou en cas de réception d'une demande de couple (provenant par exemple d'un calculateur chargé de contrôler la trajectoire du véhicule (ou ESP)), ou encore lorsqu'aucune prise de couple sur le vilebrequin n'a été détectée pendant une durée supérieure à un sixième seuil choisi ;
   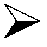 on peut déclencher l'arrêt de (ou désactiver) la stratégie de façon prioritaire sur le déclenchement (ou l'activation) de la stratégie lorsque des conditions d'activation et de désactivation de cette stratégie sont simultanément vérifiées.

L'invention propose également un dispositif destiné à détecter un décollage (ou démarrage) pied levé d'un véhicule à groupe motopropulseur comprenant un vilebrequin, pour déclencher une stratégie d'aide au décollage destinée à augmenter un régime de consigne d'un régulateur de ralenti de ce véhicule, en cas de détection d'un appui sur la pédale d'embrayage, d'une absence d'appui sur la pédale de frein, d'une vitesse du véhicule sensiblement nulle et d'au moins une prise de couple choisie sur le vilebrequin.

Le dispositif selon l'invention peut comporter d'autres caractéristiques qui peuvent être prises séparément ou en combinaison, et notamment :
- il peut être agencé pour inhiber le déclenchement de la stratégie en cas, en outre, d'une détection d'un fonctionnement du groupe motopropulseur pendant une durée qui est inférieure à un premier seuil choisi ;
- il peut être agencé pour détecter la prise de couple choisie sur le vilebrequin lorsqu'un régime moteur du groupe motopropulseur est inférieur à un deuxième seuil choisi et qu'un gradient de ce régime moteur est inférieur à un troisième seuil choisi, négatif, ou lorsqu'un gradient d'un couple de consigne de régulation de ralenti du groupe motopropulseur est supérieur à un quatrième seuil choisi, positif ;
- il peut être agencé pour déclencher un arrêt de la stratégie lorsque la vitesse du véhicule est supérieure à un cinquième seuil choisi correspondant à la fin du décollage, ou en cas de réception d'une demande de couple (provenant par exemple de l'ESP), ou encore lorsqu'aucune prise de couple sur le vilebrequin n'a été détectée pendant une durée qui est supérieure à un sixième seuil choisi.

L'invention propose également un calculateur, destiné à contrôler le fonctionnement d'un groupe motopropulseur d'un véhicule, et comprenant un dispositif de détection (D) du type de celui présenté ci-avant.

L'invention propose également un véhicule, éventuellement de type automobile, et comprenant un groupe motopropulseur et un calculateur du type de celui présenté ci-avant.

D'autres caractéristiques et avantages de l'invention apparaîtront à l'examen de la description détaillée ci-après, et des dessins annexés, sur lesquels :

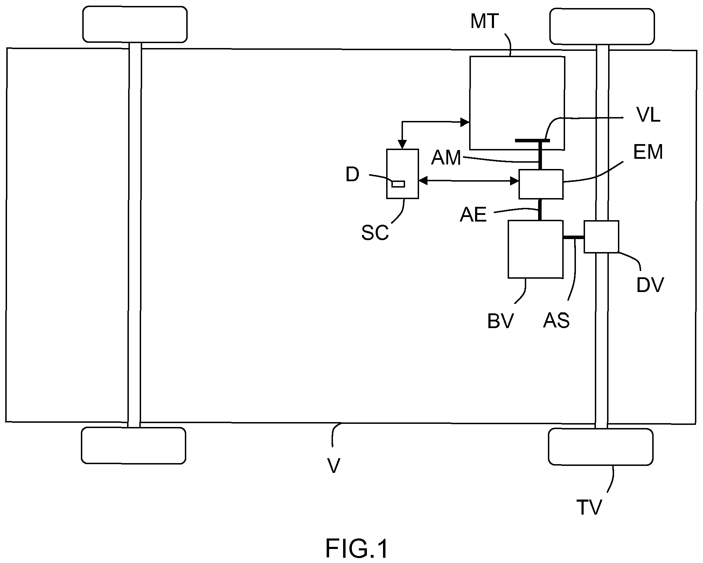

- la figure 1 illustre schématiquement et fonctionnellement un exemple de véhicule à groupe motopropulseur à boîte de vitesses manuelle, et comportant un calculateur muni d'un dispositif de détection selon l'invention, et

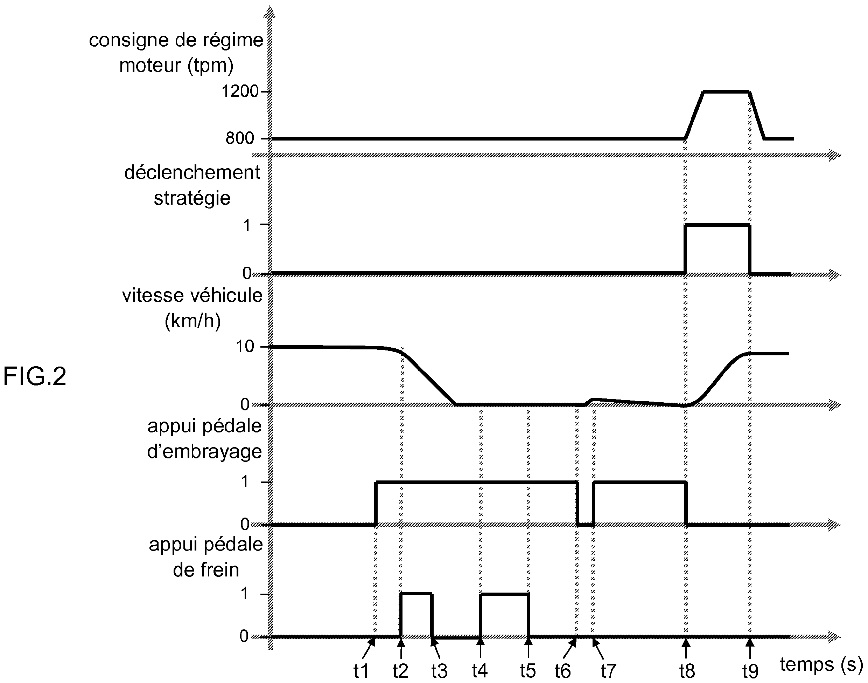

- la figure 2 illustre schématiquement au sein de cinq diagrammes, du plus haut vers le plus bas, l'évolution temporelle de la consigne de régime du moteur thermique, l'évolution temporelle de la variable de déclenchement de la stratégie d'aide, l'évolution temporelle de la vitesse du véhicule, l'évolution temporelle de l'appui sur la pédale d'embrayage, et l'évolution temporelle de l'appui sur la pédale de frein.

L'invention a pour but de proposer un procédé de détection, et un dispositif de détection D associé, destinés à détecter l'occurrence d'un démarrage de type dit « pied levé » d'un véhicule V à groupe motopropulseur comprenant un moteur thermique MT à vilebrequin VL et une boîte de vitesses BV de type manuel.

On considère dans ce qui suit, à titre d'exemple non limitatif, que le véhicule V est de type automobile. Il s'agit par exemple d'une voiture. Mais l'invention n'est pas limitée à ce type de véhicule. Elle concerne en effet tout véhicule ayant un groupe motopropulseur destiné à fournir du couple sur son vilebrequin, par exemple pour faire tourner des roues ou une hélice. Par conséquent, l'invention concerne notamment les véhicules terrestres (voitures, motocyclettes, véhicules utilitaires, cars (ou bus), camions, engins de voirie, engins de chantier, engins de manutention, trains), les véhicules fluviaux ou maritimes, et les aéronefs.

Par ailleurs, on considère dans ce qui suit, à titre d'exemple non limitatif, que les fonctionnements du moteur thermique MT et de l'embrayage EM sont contrôlés par un même calculateur (ou superviseur) SC. Mais cela n'est pas obligatoire. Ils pourraient en effet être contrôlés par deux calculateurs pouvant communiquer entre eux, par exemple via un réseau de communication du véhicule V, éventuellement de type multiplexé.

On a schématiquement illustré sur la figure 1 un exemple non limitatif d'un véhicule V à groupe motopropulseur conventionnel. Comme illustré, ce véhicule V comprend au moins un moteur thermique MT, un arbre moteur AM, un embrayage EM et une boîte de vitesses BV.

Le moteur thermique MT comprend un vilebrequin VL qui est solidarisé fixement à l'arbre moteur AM afin d'entraîner ce dernier (AM) en rotation selon un régime moteur choisi.

La boîte de vitesses BV est de type manuel et comprend, ici, classiquement un arbre d'entrée (ou primaire) AE et un arbre de sortie AS destinés à être couplés l'un à l'autre en vue de transmettre du couple. L'arbre d'entrée AE est destiné à recevoir le couple moteur via l'embrayage EM et comprend plusieurs pignons (non représentés) destinés à participer à la définition des différentes vitesses (ou rapports) sélectionnables de la boîte de vitesses BV. L'arbre de sortie AS est destiné à recevoir le couple moteur via l'arbre d'entrée AE afin de le communiquer à un train (ici le train avant TV), via un différentiel DV et éventuellement via un arbre de transmission. Cet arbre de sortie AS comprend plusieurs pignons (non représentés) destinés à engrener certains pignons de l'arbre d'entrée AE afin de participer à la définition des différentes vitesses (ou rapports) sélectionnables de la boîte de vitesses BV.

L'embrayage EM comprend notamment un volant moteur qui est solidarisé fixement à l'arbre moteur AM et un disque d'embrayage qui est solidarisé fixement à l'arbre d'entrée AE.

Le calculateur (ou superviseur) SC est notamment chargé de mettre en oeuvre des stratégies de gestion du couple qui doit être fourni par le groupe motopropulseur (ou GMP) et de gestion des phases de ralenti du moteur thermique MT.

Comme indiqué plus haut, l'invention propose notamment de mettre en oeuvre, au sein d'un véhicule V, un procédé destiné à détecter son décollage (ou démarrage) pied levé, c'est-à-dire lorsque le conducteur n'appuie pas de manière significative sur la pédale d'accélérateur.

Cette mise en oeuvre peut se faire au moyen d'un dispositif de détection D qui peut, comme illustré non limitativement sur la figure 1, être installé dans le calculateur SC. Mais cela n'est pas obligatoire. En effet, il pourrait être externe au calculateur SC, tout en étant couplé à ce dernier (SC). Dans ce dernier cas, il peut être lui-même agencé sous la forme d'un calculateur dédié comprenant un éventuel programme dédié, par exemple. Par conséquent, un dispositif de détection D, selon l'invention, peut être réalisé sous la forme de modules logiciels (ou informatiques (ou encore « software »)), ou bien de circuits électroniques (ou « hardware »), ou encore d'une combinaison de circuits électroniques et de modules logiciels.

Le procédé (de détection), selon l'invention, consiste à détecter un décollage (ou démarrage) de type pied levé du véhicule V, en vue du déclenchement d'une stratégie d'aide au décollage destinée à augmenter le régime de consigne d'un régulateur de ralenti de ce véhicule V, en cas de détection d'un appui (ou enfoncement) sur la pédale d'embrayage de ce véhicule V, d'une absence d'appui sur (ou non-enfoncement de) la pédale de frein de ce véhicule V, d'une vitesse du véhicule V sensiblement nulle et d'au moins une prise de couple choisie sur le vilebrequin VL.

En d'autres termes, chaque fois que le dispositif (de détection) D détecte que la pédale d'embrayage est (suffisamment) enfoncée, que la pédale de frein n'est pas (suffisamment) enfoncée, que la vitesse du véhicule V est sensiblement nulle et que du couple est en train d'être prélevé sur le vilebrequin VL, il en déduit que l'on est en présence d'un décollage pied levé et donc autorise le déclenchement de la stratégie d'aide au décollage au niveau du calculateur SC. Cette stratégie d'aide au décollage consiste à augmenter temporairement la consigne de régulation de ralenti statique.

Le calcul de la consigne d'augmentation (ou « offset ») de régime (également appelée consigne brute d'offset de régime) à ajouter à la consigne de régulation de ralenti statique se fait, par exemple, en fonction de la vitesse du véhicule V et de l'enfoncement de la pédale d'accélérateur (lorsque le posé de pied est faible, l'offset calculé est atténué avec l'appui sur la pédale d'accélérateur). Par exemple, cet offset est maximal lors d'un enfoncement nul de la pédale d'accélérateur et dégressive avec l'enfoncement de cette pédale d'accélérateur.

Grâce à l'invention, on va donc uniquement activer la stratégie d'aide quand il y a un vrai besoin, c'est-à-dire en présence d'un décollage pied levé, au moment où il y a un prélèvement de couple sur le vilebrequin VL. Dans les autres situations, comme par exemple en cas d'arrêt du véhicule V au niveau d'un feu rouge ou dans une queue, ou d'un appui sur la pédale de frein à l'arrêt, la stratégie d'aide n'est pas déclenchée (ou activée).

Afin de rendre encore plus sévères les conditions de détection d'un décollage, on peut inhiber le déclenchement de la stratégie en cas de détection d'un fonctionnement du groupe motopropulseur pendant une durée qui est inférieure à un premier seuil choisi. Par exemple, ce premier seuil peut être compris entre environ 1 s et environ 5 s.

La détection de la prise de couple choisie sur le vilebrequin VL peut se faire lorsque le régime moteur du groupe motopropulseur est inférieur à un deuxième seuil choisi et que le gradient de ce régime moteur est inférieur à un troisième seuil choisi, négatif, ou bien lorsque le gradient du couple nécessaire au maintien ou à la régulation de la consigne de régulation de ralenti est supérieur à un quatrième seuil choisi, positif. L'augmentation du couple de consigne de régulation de ralenti traduit une baisse de régime (et vient compenser cette dernière), et donc une prise de couple sur le vilebrequin VL.

Par exemple, le deuxième seuil peut être compris entre environ 700 tours/minute et environ 1000 tours/minute.

Par exemple, le troisième seuil peut être compris entre environ -600 tours/minute/seconde et environ -300 tours/minute/seconde.

Par exemple, le quatrième seuil peut être compris entre environ 10 Nm/s et environ 100 Nm/s.

On notera que les différents seuils précités et suivants sont déterminés en fonction du modèle du véhicule V en balayant les situations de vie dans lesquelles on a un décollage pied levé.

Le procédé selon l'invention peut également comprendre un déclenchement de l'arrêt de la stratégie d'aide lorsque la vitesse du véhicule V est supérieure à un cinquième seuil choisi qui correspond à la fin du décollage, ou bien en cas de réception par le calculateur SC d'une demande de fourniture de couple par le moteur thermique MT (par exemple en provenance d'un calculateur embarqué chargé de contrôler la trajectoire du véhicule V (fonction ESP (« Electronic Stability Program »))), ou encore lorsqu'aucune prise de couple sur le vilebrequin VL n'a été détectée pendant une durée qui est supérieure à un sixième seuil choisi.

Par exemple, le cinquième seuil peut être compris entre environ 3 km/h et environ 8 km/h.

Par exemple, le sixième seuil peut être compris entre environ 2 s et environ 10 s.

De préférence, on (le dispositif D) peut déclencher l'arrêt de la stratégie d'aide de façon prioritaire sur le déclenchement de cette même stratégie d'aide lorsque les conditions d'activation et de désactivation de cette stratégie sont simultanément vérifiées.

On notera que tous les paramètres ou variables qui sont utilisés par le dispositif D sont fournis à ce dernier (D) par le calculateur SC, soit spontanément, soit sur requête, le calculateur SC les ayant lui-même obtenus par calculs ou estimations internes ou bien auprès d'autres équipements embarqués dans le véhicule V.

On a schématiquement illustré sur la figure 2 cinq exemples non limitatifs de diagrammes d'évolution temporelle de variables et consigne intervenant dans la mise en oeuvre de l'invention. Ces exemples définissent une situation pendant laquelle le conducteur demeure constamment le pied levé pour ce qui concerne la pédale d'accélérateur.

La première évolution temporelle (placée la plus en haut) concerne la consigne de régime du moteur thermique MT (en tours par minute (ou tpm)). La deuxième évolution temporelle (placée en dessous de la précédente) concerne la variable de déclenchement de la stratégie d'aide (elle prend ici soit la valeur 0 (pas de stratégie d'aide activée), soit la valeur 1 (stratégie d'aide activée)). La troisième évolution temporelle (placée en dessous de la précédente) concerne la vitesse du véhicule (en km/h). La quatrième évolution temporelle (placée en dessous de la précédente) concerne la variable d'appui sur la pédale d'embrayage (elle prend ici soit la valeur 0 (pas d'appui), soit la valeur 1 (appui)). La cinquième évolution temporelle (placée en dessous de la précédente) concerne la variable d'appui sur la pédale de frein (elle prend ici soit la valeur 0 (pas d'appui), soit la valeur 1 (appui)).

Dans la situation définie par les courbes, jusqu'à l'instant t1 l'embrayage est fermé (état 0), la consigne initiale de régime de ralenti calculée par le calculateur SC est égale à 800 tpm, et le véhicule V roule à une vitesse de 10 km/h. Par conséquent, la stratégie d'aide n'est pas activée (ou déclenchée) du fait que les conditions de déclenchement mentionnées plus haut ne sont pas satisfaites simultanément.

A l'instant T1, le conducteur appuie sur la pédale d'embrayage, ce qui fait passer sa variable de la valeur 0 (pas d'appui) à la valeur 1 (appui ou débrayage). Cela induit une très légère diminution de la vitesse du véhicule V jusqu'à l'instant t2. Par ailleurs, la consigne de régime de ralenti calculée par le calculateur SC est toujours égale à 800 tpm car la stratégie d'aide n'est toujours pas activée (ou déclenchée) du fait de la non satisfaction simultanée des conditions de déclenchement mentionnées plus haut (vitesse du véhicule V non nulle et aucune détection de prélèvement de couple sur le vilebrequin VL).

A l'instant T2, le conducteur appuie sur la pédale de frein tout en continuant d'appuyer sur la pédale d'embrayage, par exemple pour immobiliser le véhicule V, ce qui fait passer la variable de freinage de la valeur 0 (pas d'appui) à la valeur 1 (appui ou freinage). Cela induit une diminution de la vitesse du véhicule V. Par ailleurs, la consigne de régime de ralenti calculée par le calculateur SC est toujours égale à 800 tpm car la stratégie d'aide n'est toujours pas activée (ou déclenchée) du fait de la non satisfaction simultanée des conditions de déclenchement mentionnées plus haut (vitesse du véhicule V non nulle et aucune détection de prélèvement de couple sur le vilebrequin VL).

A l'instant T3, le conducteur cesse d'appuyer sur la pédale de frein mais continue d'appuyer sur la pédale d'embrayage, par exemple pour immobiliser le véhicule V, ce qui fait passer la variable de freinage de la valeur 1 (appui ou freinage) à la valeur 0 (pas d'appui). Cela continue d'induire une diminution de la vitesse du véhicule V. Par ailleurs, la consigne de régime de ralenti calculée par le calculateur SC est toujours égale à 800 tpm car la stratégie d'aide n'est toujours pas activée (ou déclenchée) du fait de la non satisfaction simultanée des conditions de déclenchement mentionnées plus haut (vitesse du véhicule V non nulle et aucune détection de prélèvement de couple sur le vilebrequin VL).

A l'instant T4, la vitesse du véhicule V est devenue nulle et le conducteur appuie de nouveau sur la pédale de frein pour maintenir le véhicule V à l'arrêt, tout en continuant d'appuyer sur la pédale d'embrayage, ce qui fait passer la variable de freinage de la valeur 0 (pas d'appui) à la valeur 1 (appui ou freinage). La consigne de régime de ralenti calculée par le calculateur SC est toujours égale à 800 tpm car la stratégie d'aide n'est toujours pas activée (ou déclenchée) du fait de la non satisfaction simultanée des conditions de déclenchement mentionnées plus haut (aucune détection de prélèvement de couple sur le vilebrequin VL).

A l'instant T5, le conducteur cesse d'appuyer sur la pédale de frein mais continue d'appuyer sur la pédale d'embrayage, par exemple du fait qu'il considère que le véhicule V est bien immobile, ce qui fait passer la variable de freinage de la valeur 1 (appui ou freinage) à la valeur 0 (pas d'appui). La consigne de régime de ralenti calculée par le calculateur SC est toujours égale à 800 tpm car la stratégie d'aide n'est toujours pas activée (ou déclenchée) du fait de la non satisfaction simultanée des conditions de déclenchement mentionnées plus haut (aucune détection de prélèvement de couple sur le vilebrequin VL).

A l'instant T6, le conducteur cesse d'appuyer sur la pédale d'embrayage, par exemple du fait qu'il veut faire avancer le véhicule V à très faible vitesse, ce qui fait passer la variable d'embrayage de la valeur 1 (appui ou débrayage) à la valeur 0 (pas d'appui ou embrayage). Cela induit une très légère augmentation de la vitesse du véhicule V. La consigne de régime de ralenti calculée par le calculateur SC est toujours égale à 800 tpm car la stratégie d'aide n'est toujours pas activée (ou déclenchée) du fait de la non satisfaction simultanée des conditions de déclenchement mentionnées plus haut (trop petit couple prélevé sur le vilebrequin VL).

Entre les instants T7 et T8, le conducteur recommence à appuyer sur la pédale d'embrayage, ce qui fait passer sa variable de la valeur 0 (pas d'appui) à la valeur 1 (appui ou débrayage). Cela induit une très lente diminution de la vitesse du véhicule V jusqu'à la valeur nulle à l'instant t8. Par ailleurs, la consigne de régime de ralenti calculée par le calculateur SC est toujours égale à 800 tpm car la stratégie d'aide n'est toujours pas activée (ou déclenchée) du fait de la non satisfaction simultanée des conditions de déclenchement mentionnées plus haut (aucune détection de prélèvement de couple sur le vilebrequin VL).

A l'instant t8, le dispositif D détecte que la vitesse du véhicule V est nulle et que le couple prélevé sur le vilebrequin VL est suffisant pour qu'il puisse considérer qu'il y a un décollage pied levé. Par conséquent, le dispositif D autorise le déclenchement de la stratégie d'aide, ce qui fait passer sa variable de la valeur 0 à la valeur 1. En raison du changement de la valeur de la variable de stratégie d'aide, le calculateur SC augmente progressivement la consigne de régime de ralenti. Par exemple, il la fait croître progressivement dans un premier temps de 800 tpm à 1200 tpm, ce qui induit une augmentation rapide de la vitesse du véhicule V. Puis, il la maintient constante quelques instants.

A l'instant t9, le dispositif D détecte que la vitesse du véhicule V est supérieure au cinquième seuil choisi qui correspond à la fin du décollage. Par conséquent, le dispositif D déclenche l'arrêt de la stratégie d'aide, ce qui fait passer sa variable de la valeur 1 à la valeur 0. La vitesse du véhicule V demeure alors quasiment constante et le calculateur SC abaisse la consigne de régime de ralenti à sa valeur initiale (non augmentée - ici égale à 800 tpm) du fait que la demande de déclenchement de la stratégie d'aide a été arrêtée.

Grâce à l'invention, l'agrément de conduite est notablement amélioré dans les phases de décollage pied levé du fait de la minimisation des risques de calage et de l'absence d'oscillations du régime moteur lorsque la vitesse du véhicule est faible ou nulle (par exemple lors d'un arrêt à un feu tricolore, ou lors d'une manoeuvre). Cet avantage est d'autant plus appréciable lorsque le véhicule dispose d'un moteur à trois cylindres, dont la sensibilité est plus grande dans les phases de décollage pied levé. De plus, l'invention permet de diminuer la consommation de carburant du fait de la réduction du temps et du nombre d'occurrences pendant lesquels le régime de ralenti est augmenté.

## Revendications

1. Procédé de détection d'un décollage de type dit « pied levé » d'un véhicule (V) à groupe motopropulseur comprenant un vilebrequin (VL), pour déclencher une stratégie d'aide au décollage destinée à augmenter un régime de consigne d'un régulateur de ralenti dudit véhicule (V), ledit procédé consistant à détecter ledit décollage de type pied levé en cas de détection d'un appui sur une pédale d'embrayage dudit véhicule (V), d'une absence d'appui sur une pédale de frein dudit véhicule (V), d'une vitesse dudit véhicule (V) sensiblement nulle et d'au moins une prise de couple choisie sur ledit vilebrequin (VL), ledit procédé étant **caractérisé en ce que** l'on inhibe ladite stratégie en cas d'une détection d'un fonctionnement dudit groupe motopropulseur pendant une durée qui est inférieure à un premier seuil choisi compris entre environ 1 s et environ 5 s.

2. Procédé selon la revendication 1, **caractérisé en ce que** l'on détecte ladite prise de couple choisie sur le vilebrequin (VL) lorsqu'un régime moteur dudit groupe motopropulseur est inférieur à un deuxième seuil choisi et qu'un gradient dudit régime moteur est inférieur à un troisième seuil choisi, négatif, ou lorsqu'un gradient d'un couple de consigne de régulation de ralenti dudit groupe motopropulseur est supérieur à un quatrième seuil choisi, positif.

3. Procédé selon l'une des revendications 1 et 2, **caractérisé en ce que** l'on déclenche un arrêt de ladite stratégie lorsque ladite vitesse du véhicule (V) est supérieure à un cinquième seuil choisi correspondant à la fin dudit décollage, ou en cas de réception d'une demande de couple, ou encore lorsqu'aucune prise de couple sur ledit vilebrequin (VL) n'a été détectée pendant une durée supérieure à un sixième seuil choisi.

4. Procédé selon la revendication 3, **caractérisé en ce que** l'on déclenche ledit arrêt de façon prioritaire sur ledit déclenchement de la stratégie lorsque des conditions d'activation et de désactivation de cette stratégie sont simultanément vérifiées.

5. Procédé selon l'une des revendications 3 et 4, **caractérisé en ce que** l'on déclenche un arrêt de ladite stratégie en cas de réception d'une demande de couple provenant d'un calculateur chargé de contrôler la trajectoire dudit véhicule (V).

6. Dispositif (D) de détection d'un décollage de type dit « pied levé » d'un véhicule (V) à groupe motopropulseur comprenant un vilebrequin (VL), pour déclencher une stratégie d'aide au décollage destinée à augmenter un régime de consigne d'un régulateur de ralenti dudit véhicule (V), ledit dispositif étant agencé pour détecter ledit décollage de type pied levé en cas de détection d'un appui sur une pédale d'embrayage dudit véhicule (V), d'une absence d'appui sur une pédale de frein dudit véhicule (V), d'une vitesse dudit véhicule (V) sensiblement nulle et d'au moins une prise de couple choisie sur ledit vilebrequin (VL), ledit dispositif étant **caractérisé en ce qu'**il est agencé pour inhiber ladite stratégie en cas d'une détection d'un fonctionnement dudit groupe motopropulseur pendant une durée inférieure à un premier seuil choisi compris entre environ 1 s et environ 5s.

7. Calculateur (SC) pour contrôler le fonctionnement d'un groupe motopropulseur d'un véhicule (V), **caractérisé en ce qu'**il comprend un dispositif de détection (D) selon la revendication 6.

8. Véhicule (V) comprenant un groupe motopropulseur, **caractérisé en ce qu'**il comprend en outre un calculateur (SC) selon la revendication 7.

## Patentansprüche

1. Verfahren zum Erfassen eines Anfahrens vom Typ des sogenannten "Fußhebens" eines Fahrzeugs (V) mit Antriebsstrang, der eine Kurbelwelle (VL) umfasst, um eine Unterstützungsstrategie zum Anfahren auszulösen, die dazu bestimmt ist, eine Solldrehzahl eines Leerlaufreglers des Fahrzeugs (V) zu erhöhen, wobei das Verfahren darin besteht, das Anfahren vom Typ Fußheben in dem Fall einer Erfassung eines Drucks auf ein Kupplungspedal des Fahrzeugs (V), einer Abwesenheit von Druck auf ein Bremspedal des Fahrzeugs (V), einer Geschwindigkeit des Fahrzeugs (V) im Wesentlichen gleich null und mindestens einer ausgewählten Lastübernahme auf der Kurbelwelle (VL) zu erfassen, Verfahren **dadurch gekennzeichnet, dass** die Strategie im Fall einer Erfassung eines Betriebs des Antriebsstrangs während einer Dauer, die kleiner ist als ein erster ausgewählter Schwellenwert, der zwischen etwa 1 s und etwa 5 s liegt, inhibiert wird.

2. Verfahren nach Anspruch 1, **dadurch gekennzeichnet, dass** die ausgewählte Lastübernahme auf der Kurbelwelle (VL), wenn eine Motordrehzahl des Antriebsstrangs kleiner ist als ein zweiter ausgewählter Schwellenwert, und ein Gradient der Antriebsdrehzahl kleiner ist als ein dritter ausgewählter negativer Schwellenwert, oder wenn ein Gradient eines Solldrehmoments zur Leerlaufregelung des Antriebsstrangs größer ist als ein vierter ausgewählter positiver Schwellenwert, erfasst wird.

3. Verfahren nach einem der Ansprüche 1 und 2, **dadurch gekennzeichnet, dass** ein Stoppen der Strategie ausgelöst wird, wenn die Geschwindigkeit des Fahrzeugs (V) größer ist als ein fünfter ausgewählter Schwellenwert, der dem Ende des Anfahrens entspricht, oder im Fall des Empfangs einer Drehmomentanfrage, oder auch, wenn keine Lastübernahme auf der Kurbelwelle (VL) während einer Dauer, die größer ist als ein sechster ausgewählter Schwellenwert, erfasst wurde.

4. Verfahren nach Anspruch 3, **dadurch gekennzeichnet, dass** das Stoppen vorrangig gegenüber dem Auslösen der Strategie ausgelöst wird, wenn Aktivierungs- und Deaktivierungsbedingungen dieser Strategie gleichzeitig zutreffen.

5. Verfahren nach einem der Ansprüche 3 und 4, **dadurch gekennzeichnet, dass** ein Stoppen der Strategie im Fall des Empfangs einer Drehmomentanfrage, die von einem Rechner stammt, dem das Steuern der Bahn des Fahrzeugs (V) obliegt, ausgelöst wird.

6. Verfahren (D) zum Erfassen eines Anfahrens vom Typ des "Fußhebens" eines Fahrzeugs (V) mit Antriebsstrang, der eine Kurbelwelle (VL) umfasst, um eine Unterstützungsstrategie beim Anfahren auszulösen, die dazu bestimmt ist, eine Solldrehzahl eines Leerlaufreglers des Fahrzeugs (V) zu erhöhen, wobei die Vorrichtung eingerichtet ist, um das Anfahren vom Typ Fußheben im Fall einer Erfassung eines Drucks auf ein Kupplungspedal des Fahrzeugs (V), einer Abwesenheit eines Drucks auf ein Bremspedal des Fahrzeugs (V), einer Geschwindigkeit des Fahrzeugs (V) im Wesentlichen gleich null und mindestens einer ausgewählten Lastübernahme auf der Kurbelwelle (VL) zu erfassen, Vorrichtung **dadurch gekennzeichnet, dass** sie eingerichtet ist, um die Strategie im Fall einer Erfassung eines Betriebs des Antriebsstrangs während einer Dauer, die kleiner ist als ein erster ausgewählter Schwellenwert, der zwischen etwa 1 s und etwa 5 s liegt, zu inhibieren.

7. Rechner (SC) zum Steuern des Betriebs eines Antriebsstrangs eines Fahrzeugs (V), **dadurch gekennzeichnet, dass** er eine Erfassungsvorrichtung (D) nach Anspruch 6 umfasst.

8. Fahrzeug (V), das einen Antriebsstrang umfasst, **dadurch gekennzeichnet, dass** es außerdem einen Rechner (SC) nach Anspruch 7 umfasst.

## Claims

1. A method for detecting a starting from rest, of the type designated as without operating an accelerator, of a vehicle (V) with a power train including a crankshaft (VL), for triggering an assist strategy for starting from rest intended to increase a set speed of an idling regulator of said vehicle (V), said method consisting of detecting said starting from rest of the type without operating an accelerator in the case of a detection of a clutch pedal of said vehicle (V) being depressed, of an absence of depression on a brake pedal of said vehicle (V), of a substantially zero speed of said vehicle (V) and of at least one selected torque transmission on said crankshaft (VL), said method being **characterized in that** said strategy is inhibited in the case of a detection of a functioning of said power train for a duration which is less than a first selected threshold comprised between approximately 1 s and approximately 5 s.

2. The method according to Claim 1, **characterized in that** said selected torque transmission on the crankshaft (VL) is detected when an engine speed of said power train is less than a second selected threshold and a gradient of said engine speed is less than a third selected threshold, which is negative, or when a gradient of an idling regulation setpoint torque of said power train is greater than a fourth selected threshold, which is positive.

3. The method according to one of Claims 1 and 2, **characterized in that** a stoppage of said strategy is triggered when said speed of the vehicle (V) is greater than a fifth selected threshold corresponding to the end of said starting from rest, or in the case of reception of a torque request, or else when no torque transmission on said crankshaft (VL) has been detected for a duration greater than a sixth selected threshold.

4. The method according to Claim 3, **characterized in that** said stoppage is triggered on a priority basis on said triggering of the strategy when activation and deactivation conditions of this strategy are simultaneously verified.

5. The method according to one of Claims 3 and 4, **characterized in that** a stoppage of said strategy is triggered in the case of reception of a torque request originating from a computer having responsibility for controlling the trajectory of said vehicle (V).

6. A device (D) for detecting a starting from rest, of the type designated as without operating an accelerator, of a vehicle (V) with a power train including a crankshaft (VL), for triggering an assist strategy for starting from rest intended to increase a set speed of an idling regulator of said vehicle (V), said device being arranged to detect said starting from rest of the type without operating an accelerator in the case of detection of a depression on a clutch pedal of said vehicle (V), of an absence of depression on a brake pedal of said vehicle (V), of a substantially zero speed of said vehicle (V) and of at least one selected torque transmission on said crankshaft (VL), said device being **characterized in that** it is arranged to inhibit said strategy in the case of a detection of a functioning of said power train for a period less than a first selected threshold comprised between approximately 1 s and 5 s.

7. A computer (SC) for controlling the functioning of a power train of a vehicle (V), **characterized in that** it includes a detection device (D) according to Claim 6.

8. A vehicle (V) including a power train, **characterized in that** it further includes a computer (SC) according to Claim 7.
